# EUROPÄISCHE PATENTANMELDUNG

(11) **EP 0 550 860 A1**
(43) Veröffentlichungstag der Anmeldung: **14.07.1993**
(21) Anmeldenummer: 92121530.7
(22) Anmeldetag: 18.12.1992
(51) Int. Cl.: F16L 55/16, F16L 41/08

(54) **Dichtungsanordnung**

(30) Priorität: 08.01.1992 DE 4200230
(71) Anmelder: PHOENIX AKTIENGESELLSCHAFT, D-21079 Hamburg (DE)
(72) Erfinder: Oltmanns, Martin, Dipl.-Ing., W-2805 Stuhr 2 (DE); Schmidt, Wilhelm, W-6331 Schöffengrund (DE); Donath, Dieter, W-2081 Appen-Unterglinde (DE); Wulff, Gerold, Dipl.-Ing., W-2000 Hamburg 70 (DE); Kratzberg, Helmut, W-3207 Harsum-Borsum (DE); Lockhoff, Uwe, W-2105 Seevetal 3 (DE)

(57) **Zusammenfassung**

Die Erfindung betrifft eine Dichtungsanordnung, insbesondere zur Sanierung von Rohrleitungen (z.B. Abwasserkanälen), bestehend aus
- einem Rohr (10), insbesondere aus Kunststoff, das eine Abzweigöffnung aufweist;
- einem Anschluß (11) (z.B. Hausanschluß) als Abzweig und
- einer Dichtmanschette (1) aus chemikalienbeständigem elastomerem Werkstoff, die einstückig als hülsenförmiger Grundkörper (2) mit umlaufendem Kragen (3) ausgebildet ist, wobei der Grundkörper an der Innenseite des Anschlusses (11) dichtend anliegt und der Kragen (3) im Bereich der Abzweigöffnung flächenbündig an der Innenseite der Rohre (10) zu liegen kommt.

Das Wesentliche der Erfindung besteht nun darin, daß
- die Dichtmanschette (1) eine zusätzliche umlaufende Dichtlippe (4) besitzt, die außen angeordnet ist und in Richtung zum Kragen (3) weist, wobei die Dichtlippe (4) die Außenseite des Rohres (10) unter Klemmspannung umgreift.

## Beschreibung

Die Erfindung betrifft eine Dichtungsanordnung, insbesondere zur Sanierung von Rohrleitungen (z.B. Abwasserkanälen), bestehend aus einem Rohr, insbesondere aus Kunststoff, das eine Abzweigöffnung aufweist; einem Anschluß (z.B. Hausanschluß) als Abzweig und einer Dichtmanschette aus chemikalienbeständigem elastomerem Werkstoff, die einstückig als hülsenförmiger Grundkörper mit Kragen ausgebildet ist, wobei der Grundkörper an der Innenseite des Anschlusses dichtend anliegt und der Kragen im Bereich der Abzweigöffnung flächenbündig an der Innenseite des Rohres zu liegen kommt.

Die Sanierung alter Rohre mit nicht begehbarem Querschnitt wird für die Betreiber von Abwasserrohrnetzen die große Aufgabe der nächsten jahre sein. Die erheblichen Strecken alter Entwässerungsleitungen mit bereits bestehenden oder in Kürze zu erwartenden Schäden sind sowohl in abwassertechnischer Hinsicht (Verstopfungen, Straßeneinbrüche usw.) als auch in umwelttechnischer Hinsicht problematisch, da die austretenden Abwässer das Grundwasser verunreinigen und somit die Trinkwasserreserven gefährden.

Aufgrund beengter Trassenverhältnisse und hoher Verkehrsdichte kommt für die Erneuerung der vorhandenen Leitungen oft nur eine unterirdische Bauweise in Frage, wobei folgende Anforderungen zu erfüllen sind:
- keine bzw. nur geringe Erdarbeiten;
- kurze Bauzeit;
- Erhalt bzw. Verbesserung der vorhandenen hydraulischen Verhältniss;
- Kosten geringer als Neubaukosten in offener Bauweise.

Es gibt zwischenzeitlich verschiedene Sanierungsverfahren, wobei der diesbezügliche Stand der Technik ausführlich in der EP-B-0 356 911 dargelegt wird.

Im Rahmen der Sanierung alter Rohre bereitet jedoch die Bereitstellung einer wirksamen Dichtungsanordnung innerhalb des Abzweigbereiches von Rohrleitungsnetzen nach wie vor erhebliche technische Schwierigkeiten, wobei bislang folgende Lösungsansätze erarbeitet wurden:
- In der DE-A-36 18 963 wird ein Verfahren vorgestellt, bei dem mittels eines aufblasbaren Balges aus Silikon-Kautschuk eine Polyester-Spachtelmasse innerhalb des Abzweigbereiches an die Innenwand gepreßt wird. Nach dem Aushärten dieser Spachtelmasse wird dann der Balg entlüftet, wobei er sich von der ausgehärteten Spachtelmasse löst.
- Aus der DE-A-39 29 558 ist eine Dichtmanschette mit Kragen für den Abzweigbereich bekannt, die aus einem Faservlies besteht, das mit aushärtbarem Kunstharz getränkt wird.
- In der EP-A-0 335 223 wird ein Anschlußstück als inneres Anschlußrohr beschrieben, wobei im Randbereich der öffnung dieses Rohres ein Faservlies vorhanden ist, das mit einem Harz getränkt ist. Mittels zusätzlicher Vorrichtungen wird dann dieses getränkte Faservlies an die Innenfläche des Abzweigbereiches gepreßt.
- In der EP-B-0 356 911 werden zwei Varianten einer Abzweiganordnung vorgestellt. Diese sind:
   - Variante A:: Entsprechende Kunststoffrohrstücke werden miteinander verschweißt, und zwar unter Bildung einer Schweißnaht.
   - Variante B:: Im Verbindungsbereich zweier zu verbindender Kunststoffrohrstücke wird eine dauerelastische Masse (z.B. durch Verspritzen) sowie ein zusätzliches Verzweigungsstück aus Kunststoff angebracht.

Zur Herstellung der hier vorgestellten Abzweiganordnungen werden Spachtelmassen aus härtbaren Kunststoffen oder thermo-chemische Verbindungstechniken (z.B. Verschweißen) eingesetzt, wobei aufwendige Zusatzvorrichtungen erforderlich sind. Von dem erheblichen Arbeitsaufwand einmal abgesehen, ist mit Spachtelmassen wie auch Schweißnähten keine dauerhafte Dichtwirkung zu erzielen, zumal Spachtelmassen mit der Zeit unter dem Einfluß aggressiver Stoffe, die sich im Abwasser befinden, zu Rißbildungen neigen.

Mit der erfindungsgemäßen Dichtungsanordnung gemäß Kennzeichen des Anspruchs 1 wird nun eine völlig neue Abzweigtechnologie beschritten, die die oben erwähnten Nachteile nicht mit sich bringt.

Zweckmäßige Ausgestaltungen der Dichtungsanordnung sind in den Unteransprüchen 1 bis 5 genannt. Auf ein vorteilhaftes Verfahren zur Herstellung einer derartigen Dichtungsanordnung geht der Unteranspruch 6 ein.

Die Erfindung wird nun anhand eines Ausführungsbeispiels unter Bezugnahme auf schematische Zeichnungen näher erläutert. Es zeigen:
- Fig. 1: eine Dichtmanschette im Querschnitt;
- Fig. 2: das Anschließen der Dichtmanschette im Querschnitt;
- Fig. 3: die angeschlossene Dichtmanschette im Querschnitt;
- Fig. 4: desgleichen wie Fig. 3 im Längsschnitt.

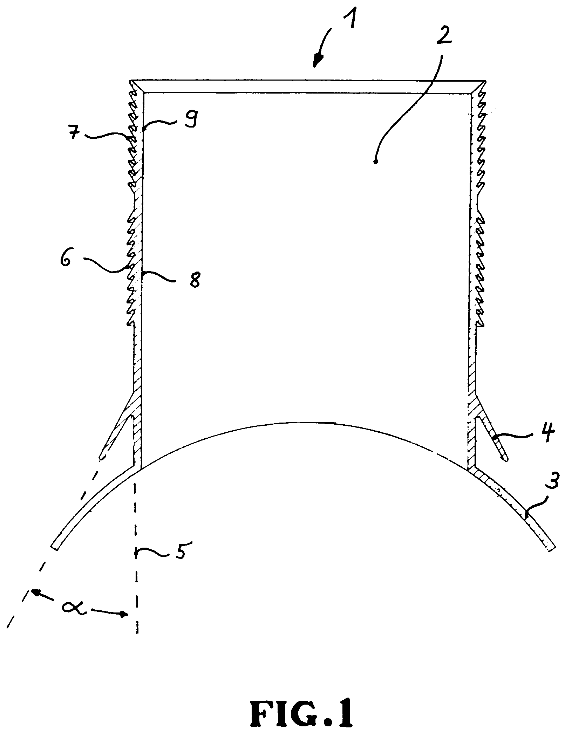

Fig. 1 zeigt eine Dichtmanschette (1) aus chemikalienbeständigem elastomerem Werkstoff, die einstückig als hülsenförmiger Grundkörper (2) mit umlaufendem Kragen (3) ausgebildet ist. Erfindungswesentlich ist nun die zusätzliche außenseitige Anordnung einer umlaufenden Dichtlippe (4), die in Richtung zum Kragen weist, wobei im unbelasteten Zustand der Winkel α kleiner 45^{o} ist, und zwar bezogen auf die Basisfläche (Linienführung 5) des Grundkörpers (2). Die Dichtlippe (4) selbst besitzt etwa die halbe Kragenlänge. Der Grundkörper weist außenseitig umlaufende Rippen (6, 7) auf, wobei zweckmäßigerweise die Rippen (6) innerhalb des mittigen Bereiches (8) des Grundkörpers in Richtung zum Kragen (3) bzw. zur Dichtlippe (4) weisen, während die Rippen (7) innerhalb des Endbereiches (9) des Grundkörpers in die entgegengesetzte Richtung zeigen.

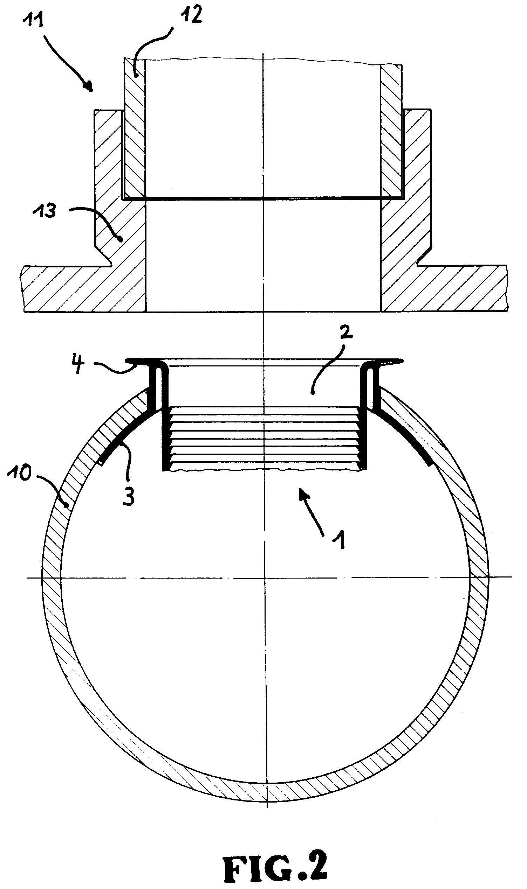

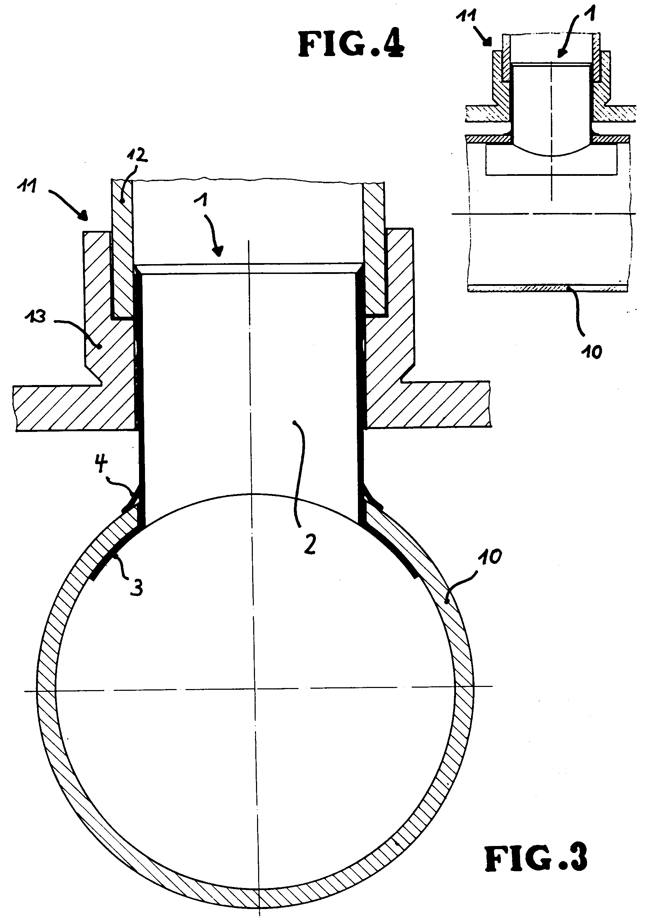

Zwecks Herstellung der erfindungsgemäßen Dichtungsanordnung wird zunächst der Grundkörper (2) der Dichtmanschette (1) im Bereich der Dichtlippe (4) nach innen gekrempelt, wobei die Dichtlippe in diesem Zustand eine im wesentlichen radiale Ausrichtung einnimmt. In diesem umgekrempelten Zustand wird nun die Dichtmanschette (1) so weit in das Rohr eingebracht, bis sich diese unterhalb der Abzweigöffnung befindet, die vorher in das Rohr aus Kunststoff eingefräst wurde. Anschließend wird die Dichtmanschette (1) in die Abzweigöffnung gedrückt, wobei der Kragen (2) flächenbündig an der Innenseite des Rohres (10) zu liegen kommt, während sich die Dichtlippe (4) außerhalb des Rohres (10) befindet und dabei weiterhin eine im wesentlichen radiale Ausrichtung einnimmt - Fig. 2. Schließlich wird der Grundkörper (2) wieder hochgekrempelt (z.B. mittels eines Roboters), wobei dieser dann an der Innenseite des Anschlusses (11), der hier aus einem Rohr (12) und einem Altrohr-Abzweiger (13) besteht, dichtend anliegt, während gleichzeitig die Dichtlippe (4) bei schnabelförmiger Ausbildung die Außenseite des Rohres (10) unter Klemmspannung umgreift - Fig. 3 und 4.

Das Rohr (10) besteht üblicherweise aus PE (Polyethylen) oder HDPE (Polyethylen hoher Dichte). Derartige Rohre kommen insbesondere beim Kurzrohr-Relining und beim Sanierungsverfahren mittels Spiralschläuchen, bei dem Schlauchabschnitte mittels Kurzrohre miteinander verbunden sind, zum Einsatz (EP-B-0 356 911). Dabei hat das Rohr (10) bei der Sanierung alter Abwasserrohrnetzen die Bedeutung eines Innenrohres (in Bezug auf das umgebende Altrohr).

Die erfindungsgemäße Dichtungsanordnung hat den Vorteil, daß diese für alle Nennweiten und Rohrdurchmesser einsetzbar ist und weitgehend unabhängig von der Art des Sanierungsverfahrens zur Anwendung kommen kann.

## Patentansprüche

1. Dichtungsanordnung, insbesondere zur Sanierung von Rohrleitungen (z.B. Abwasserkanälen), bestehend aus
- einem Rohr (10), insbesondere aus Kunststoff, das eine Abzweigöffnung aufweist;
- einem Anschluß (11) (z.B. Hausanschluß) als Abzweig und
- einer Dichtmanschette (1) aus chemikalienbeständigem elastomerem Werkstoff, die einstückig als hülsenförmiger Grundkörper (2) mit umlaufenden Kragen (3) ausgebildet ist, wobei der Grundkörper an der Innenseite des Anschlusses (11) dichtend anliegt und der Kragen (3) im Bereich der Abzweigöffnung flächenbündig an der Innenseite der Rohre (10) zu liegen kommt;
dadurch gekennzeichnet, daß
- die Dichtmanschette (1) eine zusätzliche umlaufende Dichtlippe (4) besitzt, die außen angeordnet ist und in Richtung zum Kragen (3) weist, wobei die Dichtlippe (4) die Außenseite des Rohres (10) unter Klemmspannung umgreift.

2. Dichtungsanordnung nach Anspruch 1, dadurch gekennzeichnet, daß die Dichtlippe (4) im unbelasteten Zustand einen Winkel α von kleiner 45^{o} aufweist, und zwar bezogen auf die Basisfläche (Linienführung 5) des Grundkörpers (2).

3. Dichtungsanordnung nach Anspruch 1 oder 2, dadurch gekennzeichnet, daß die Dichtlippe (4) etwa die halbe Kragenlänge besitzt.

4. Dichtungsanordnung nach einem der Ansprüche 1 bis 3, dadurch gekennzeichnet, daß der Grundkörper (2) außenseitig umlaufende Rippen (6, 7) aufweist.

5. Dichtungsanordnung nach Anspruch 4, dadurch gekennzeichnet, daß die Rippen (6), die im mittigen Bereich (8) des Grundkörpers (2) angeordnet sind, in Richtung zum Kragen (3) bzw. zur Dichtlippe (4) weisen, während die Rippen (7) innerhalb des Endbereiches (9) des Grundkörpers (2) in die entgegengesetzte Richtung zeigen.

6. Verfahren zur Herstellung einer Dichtungsanordnung, insbesondere gemäß Aufbau nach einem der Ansprüche 1 bis 5, gekennzeichnet durch folgende Verfahrensschritte:
- der Grundkörper (2) der Dichtmanschette (1) wird im Bereich der Dichtlippe (4) nach innen gekrempelt, wobei die Dichtlippe in diesem Zustand eine im wesentlichen radiale Ausrichtung einnimmt;
- in dem umgekrempelten Zustand wird danach die Dichtmanschette (1) so weit in das Rohr (10) eingebracht, bis sich diese unterhalb der Abzweigöffnung befindet;
- anschließend wird die Dichtmanschette (1) in die Abzweigöffnung gedrückt, wobei der Kragen (3) flächenbündig an der Innenseite des Rohres (10) zu liegen kommt, während sich die Dichtlippe (4) außerhalb des Rohres (10) befindet;
- schließlich wird der Grundkörper (2) wieder hochgekrempelt (z.B. mittels eines Roboters), wobei dieser dann an der Innenseite des Anschlusses (11) dichtend anliegt, während gleichzeitig die Dichtlippe (4) die Außenseite des Rohres (10) unter Klemmspannung umgreift.
